# EUROPÄISCHE PATENTSCHRIFT

(11) **EP 3 471 224 B1**
(45) Veröffentlichungstag und Bekanntmachung des Hinweises auf die Patenterteilung: **24.02.2021**
(21) Anmeldenummer: 18200093.5
(22) Anmeldetag: 12.10.2018
(51) Int. Cl.: H02G 1/12

(54) **FÜHRUNGSVORRICHTUNG FÜR EIN SPANWERKZEUG**
GUIDE DEVICE FOR A CUTTING TOOL
DISPOSITIF DE GUIDAGE POUR UN OUTIL DE COUP

(30) Priorität: 16.10.2017 DE 102017124033
(43) Veröffentlichungstag der Anmeldung: 17.04.2019
(73) Patentinhaber: NKT GmbH & Co. KG, 51061 Köln (DE)
(72) Erfinder: Wildermuth, Gregor, 51373 Leverkusen (DE)
(74) Vertreter: Zimmermann & Partner Patentanwälte mbB

(56) Entgegenhaltungen:
- EP-A1- 0 199 299
- JP-A- H06 205 520
- JP-A- S63 186 517
- JP-U- S 567 424
- JP-U- S5 644 513

## Beschreibung

Die vorliegende Erfindung betrifft eine Führungsvorrichtung für ein Spanwerkzeug, insbesondere für eine Fräse zur Formung eines Kabelansatzes bei einem elektrischen Kabel. Ein weiterer Gegenstand der Erfindung ist ein Verfahren zur Formung eines Kabelansatzes mit einer Führungsvorrichtung für ein Spanwerkzeug, insbesondere für eine Fräse.

Eine spanende Bearbeitung elektrischer Kabel kommt insbesondere bei der Bearbeitung zweier miteinander dauerhaft zu verbindender Kabel, beispielsweise mittels eines Factory-Joints, zum Einsatz. Für derartige Verbindungszwecke werden Kabelenden entweder bereits im Werk oder vor Ort während der Verlegungsarbeiten bearbeitet. Hierzu werden die im Inneren der Kabel liegenden Kabelseelen an dem jeweiligen Ende teilweise freigelegt, d. h. die die Kabelseele umgebenden Schichten des Kabelmantels, wie beispielsweise Isolierschichten und Abschirmschichten, werden bereichsweise ganz oder teilweise abgetragen. Die Kabelseele liegt dann frei und kann dann mit einem entsprechenden Gegenstück verbunden werden, beispielsweise durch Muffen, Verbindungselemente, Verschweißen oder Verlöten.

In den Patentanmeldungen JP H06205520 A und JP S63186517 A sowie der Gebrauchsmusteranmeldung JP S5644513 U werden Werkzeuge zum Entfernen von isolierendem Material an Kabelenden beschrieben. Die Werkzeuge weisen jeweils eine Führungsvorrichtung für ein Schneidwerkzeug auf.

Zur Formung eines Kabelansatzes, auch Ansätzen genannt, wird das Kabel zumeist derart spanend bearbeitet, dass sich eine allseitig in Richtung der Verbindungsstelle der beiden elektrischen Kabel verjüngende Form des Kabelmantels ergibt. Hierzu wird bislang ein Spanwerkzeug freihändig entlang des elektrischen Kabels geführt. Bei elektrischen Kabeln mit vergleichsweise kleinen Kabeldurchmessern reicht hier oft bereits ein einfaches Werkzeug, wie ein Messer aus, mit welchem manuell Teile des Kabelmantels abgetragen werden. Gerade bei elektrischen Kabeln größeren Durchmessers, welche beispielsweise zur Energie- und/oder Datenübertragung über weite Distanzen als Unterseekabel verwendet werden, ist diese Art der manuellen Bearbeitung zu aufwendig und unwirtschaftlich. Um Ansätze solcher Kabel herzustellen, kommen größere motorgetriebene Spanwerkzeuge, wie beispielsweise Fräsen, zum Einsatz. Derartige Spanwerkzeuge erlauben eine schnellere Bearbeitung, müssen aber dennoch freihändig geführt werden.

Als nachteilig hat es sich dabei erwiesen, dass händisch hergestellte Ansätze unregelmäßig ausgebildet sind und Abweichungen von der zu erzielenden Form des Ansatzes aufweisen. Ursachen hierfür können beispielsweise ein Verkanten des freihändig geführten Spanwerkzeugs relativ zum Kabel, eine ungleichmäßige Änderung des Abstands des Spanwerkzeugs zum Kabel bei der Bewegung entlang der Kabelachse oder ein unterschiedliches Abtragen um die Kabelachse herum sein. An der fertiggestellten Verbindungsstelle des Kabels ergeben sich so Unregelmäßigkeiten und Störstellen, welche sich bei der Benutzung der elektrischen Kabel negativ auf den Feldstärkenverlauf auswirken können. Gerade für Anwendungen, bei denen ein möglichst störunanfälliges Kabel erforderlich ist, sind elektrische Kabel mit derartigen Unregelmäßigkeiten daher nicht einsetzbar.

Die Aufgabe der vorliegenden Erfindung liegt daher darin, eine Vorrichtung wie auch ein Verfahren anzugeben, mit welcher sich regelmäßig geformte Kabelansätze auf einfache Art und Weise formen lassen.

Gelöst wird diese Aufgabe durch eine Führungsvorrichtung für ein Spanwerkzeug, insbesondere für eine Fräse, welche zur Formung eines Kabelansatzes an einem elektrischen Kabel mit einer Kabelachse montierbar ist, mit einer das Spanwerkzeug tragenden Werkzeugaufnahme, welche um das elektrische Kabel drehbar und entlang einer Steuerkurve entlang der Kabelachse bewegbar ist. Die Steuerkurve weist einen halbparabelartigen Verlauf auf.

Durch die Montage der Führungsvorrichtung an dem elektrischen Kabel kann die Position des Spanwerkzeugs relativ zu dem Kabel vorgegeben werden. Die das Spanwerkzeug tragende Werkzeugaufnahme kann ein ungewolltes Verkanten des Spanwerkzeugs verhindern. Da die Werkzeugaufnahme entlang der Steuerkurve bewegbar ist, kann das Spanwerkzeug reproduzierbar entlang der Kabelachse des elektrischen Kabels geführt werden. Eine ungleichmäßige Änderung des Abstands des Spanwerkzeugs zum Kabel bei einer Bewegung entlang der Kabelachse kann vermieden werden. Über die Ausgestaltung der Steuerkurve kann die Profilform des Kabelansatzes vorgegeben werden. Durch die Drehbarkeit der Werkzeugaufnahme um das elektrische Kabel kann das Kabel von allen Seiten bearbeitet werden, ohne dass die Führungsvorrichtung demontiert werden muss. Die Drehbarkeit der Werkzeugaufnahme um das elektrische Kabel ermöglicht ein gleichmäßiges Formen des Kabelansatzes um die Kabelachse. Die Hauptursachen der bei einer freihändigen Führung des Spanwerkzeugs auftretenden Unregelmäßigkeiten können mittels der Führungsvorrichtung beseitigt werden. Es kann eine hohe Übereinstimmung zwischen der erzielten und der zu erzielenden Form des Kabelansatzes erreicht werden.

In einer Weiterbildung der Erfindung ist die Neigung zwischen der Steuerkurve und der Kabelachse des Kabels variabel einstellbar. Durch eine Einstellung der Neigung, insbesondere des Neigungswinkels, zwischen der Steuerkurve und der Kabelachse des Kabels kann die Länge des Kabelansatzes in Längsrichtung variiert werden, beispielsweise in einem Bereich zwischen 150 mm und 210 mm. Die Länge des Kabelansatzes kann sich dabei nach der Spannungsebene richten, in welcher die Verwendung des Kabels vorgesehen ist. Hier hat es sich als vorteilhaft erwiesen, wenn die Mittelachse des Kabels nicht mit der Mittelachse der Führungsvorrichtung zusammen fällt. Besonders bevorzugt ist, wenn die Länge des Kabelansatzes bei hohen Spannungen vergleichsweise lang, bspw. im Bereich zwischen 180 mm und 210 mm und bei niedrigen Spannungen kurz, bspw. im Bereich zwischen 150 mm und 180 mm ausgebildet ist. Alternativ oder zusätzlich kann die Länge des Kabelansatzes abhängig von der Wanddicke des die Kabelseele umgebenden Kabelmantels gewählt werden. Die Führungsvorrichtung kann so auf einfache Art und Weise zur Formung von Kabelansätzen an sich hinsichtlich ihrer Querschnitte, Kabelmanteldicken und/oder vorgesehenen Spannungsebenen unterscheidenden Kabeln verwendet werden.

Bevorzugt weist die Steuerkurve einen parabelartigen Verlauf auf. Durch eine parabelartige verlaufende Steuerkurve kann ein Kabelansatz geformt werden, welcher eine insgesamt parabelförmig verlaufende Oberfläche aufweist. Auf diese Weise kann ein im Wesentlichen konusförmiger, sich parabelartig zuspitzender Kabelansatz hergestellt werden. Bevorzugt kann der Verlauf der Steuerkurve und somit auch die Form des Kabelansatzes auf Tangentialfeldstärkenberechnungen basieren. Die Tangentialfeldstärkenberechnungen können eine Vorgabe für eine Kabelansatzform liefern, welche Störungen der Tangentialfeldstärke im Bereich des Kabelansatzes minimiert. Mit Hilfe der Führungsvorrichtung kann eine Ansatzform hergestellt werden, welche durch ein manuelles, freihändiges Ansetzen nicht in ausreichender Qualität, d. h. mit geringen Unregelmäßigkeiten, erzielt werden kann.

Vorzugsweise ist die Werkzeugaufnahme an einem Führungsteil angeordnet. Durch ein Führungsteil kann die Führung der das Spanwerkzeug tragenden Werkzeugaufnahme auf konstruktiv einfache Art und Weise realisiert werden.

In diesem Zusammenhang hat es sich als vorteilhaft erwiesen, wenn die Werkzeugaufnahme zusammen mit dem Führungsteil um das elektrische Kabel drehbar ist. Da die Werkzeugaufnahme zusammen mit dem Führungsteil um das elektrische Kabel drehbar ist, kann die Werkzeugaufnahme drehfest an dem Führungsteil angeordnet sein. Das Führungsteil kann die Stabilität der Werkzeugaufnahme während einer Drehung um das Kabel verbessern. Einem Verkanten der Werkzeugaufnahme und damit des Spanwerkzeugs kann auf diese Weise besonders einfach entgegengewirkt werden.

Gemäß einer konstruktiven Ausgestaltung wird vorgeschlagen, dass das Führungsteil mehrere Steuerelemente, insbesondere zwei Steuerelemente, umfasst, welche jeweils mindestens eine Steuerkurve aufweisen. Die Werkzeugaufnahme kann dabei entlang jeder der Steuerkurven der Steuerelemente bewegbar sein. Weisen mindestens zwei der mehreren Steuerelemente jeweils eine gleichverlaufende Steuerkurve auf, kann die Werkzeugaufnahme gleichzeitig in beiden Steuerkurven zuverlässig geführt werden. Durch gleichverlaufende Steuerkurven kann die Werkzeugaufnahme mit erhöhter Stabilität entlang der Steuerkurven bewegt werden. Steuerelemente mit unterschiedlichen Steuerkurven können je nach Bedarf die Formung einer bestimmten Kabelansatzform ermöglichen. Die mindestens eine Steuerkurve kann in dem Steuerelement angeordnet sein. Auf diese Weise kann die Steuerkurve auf mindestens zwei Seiten durch das Steuerelement auf konstruktiv einfache Art begrenzt werden.

In diesem Zusammenhang ist es besonders vorteilhaft, wenn zumindest eine Steuerkurve nach Art einer Nut ausgebildet ist. Durch das Ausbilden einer Steuerkurve nach Art einer Nut kann die Steuerkurve in drei Raumrichtungen begrenzt werden. Die entlang der Steuerkurve bewegbare Werkzeugaufnahme kann auf diese Art besonders stabil geführt werden. Die nutartige Steuerkurve kann auf der dem Kabel zugewandten Seite, insbesondere der innenliegenden Seite der Führungsvorrichtung, zur Zentrierung der Werkzeugbewegung quer zur Steuerkurve eine Einkerbung aufweisen, insbesondere ein im Wesentlichen V-förmiges Nut-Profil. Hierbei hat es sich als besonders vorteilhaft erwiesen, wenn das Nut-Profil komplementär zu mindestens einem Führungselement der Werkzeugaufnahme ausgebildet ist. Auf diese Weise kann das Führungselement in die Nut eingreifen und in dieser geführt werden.

In Weiterbildung der Erfindung ist die Werkzeugaufnahme als ein Schlitten ausgebildet. Ein Schlitten kann auf einfache Art und Weise entlang der Steuerkurve bewegt werden. Die als Schlitten ausgebildete Werkzeugaufnahme kann einen flächigen Kontaktbereich zum stabilen Tragen des Spanwerkzeugs aufweisen, so dass das Spanwerkzeug zuverlässig bewegt werden kann.

Weiter vorteilhaft ist es, wenn die Werkzeugaufnahme mittels an der Werkzeugaufnahme angeordneten Führungselementen, insbesondere mittels Rollen, entlang der Steuerkurve führbar ist. Führungselemente können ein reproduzierbares Führen der Werkzeugaufnahme entlang der Steuerkurve ermöglichen. Insbesondere als Rollen ausgebildete Führungselemente können auf vorteilhafte Weise die zur Bewegung der Werkzeugaufnahme aufzuwendenden Kräfte reduzieren. Als besonders vorteilhaft hat es sich erwiesen, wenn die Führungselemente zur Erzielung einer Selbstausrichtung zu mindestens teilweisekonisch, insbesondere als Doppelkonus, ausgebildet sind. Sich selbstausrichtende Führungselemente können ihre Position quer zur Steuerkurve selbstständig, d. h. ohne ein hierauf gezieltes externes Einwirken, ausrichten und auf diese Weise das Gleiten der Werkzeugaufnahme in der Steuerkurve verbessern. Es hat sich insbesondere als vorteilhaft erwiesen, wenn die Führungselemente komplementär zur Form des Profils der Steuerkurve ausgebildet sind.

Eine bevorzugte Ausgestaltung sieht vor, dass mindestens zwei Führungselemente quer zur Steuerkurve gegeneinander versetzt angeordnet sind. Quer zur Steuerkurve versetzte Führungselemente, insbesondere paarweise gegenüberliegende Führungselemente, können ein Verkippen der Werkzeugaufnahme quer zur Steuerkurve verhindern. Die Führungselemente, insbesondere die gegenüberliegenden Führungselemente eines Paares, können unterschiedlich ausgestaltet sein. Eine unterschiedliche Ausgestaltung in den gegenüberliegenden Führungselementen kann zu einer Selbstausrichtung während der Bewegung der Werkzeugaufnahme beitragen. Besonders vorteilhaft ist, wenn die Führungselemente abwechselnd nach oben und nach unten in Bezug auf die Steuerkurve versetzt angeordnet sind. Besonders bevorzugt ist, wenn mindestens ein Führungselement in der oberen Seite, d.h. in der kabelgewandten Seite und mindestens ein Führungselement in der inneren Seite, d.h. der kabelzugewandten Seite der Steuerkurve geführt wird. Mittels der beiden Nuten kann die Werkzeugaufnahme parallel zur Kontur der Steuerkurve geführt werden.

In diesem Zusammenhang ist es besonders vorteilhaft, wenn die Werkzeugaufnahme mindestens drei Führungselemente aufweist. Die mindestens drei Führungselemente können eine Bewegung der Werkzeugaufnahme entlang der Steuerkurve stabilisieren. Entlang der Steuerkurve können die Führungselemente hintereinander angeordnet sein. Eine entlang der Steuerkurve hintereinander erfolgende Anordnung zumindest eines Teils der Führungselemente kann ein Verkippen der Werkzeugaufnahme in Richtung der Steuerkurve verhindern.

Eine in diesem Zusammenhang vorteilhafte Ausgestaltung sieht vor, dass, mindestens zwei Führungselemente entlang einer ersten Seite und mindestens ein Führungselement entlang einer zweiten Seite der Steuerkurve führbar sind. Auf diese Weise kann ein Spiel der Werkzeugaufnahme in der Steuerkurve reduziert werden. Ein Kontakt der entlang der ersten Seite geführten Führungselemente mit der zweiten Seite der Steuerkurve kann, ebenso wie ein Kontakt des entlang der zweiten Seite der Steuerkurve geführten Führungselements mit der ersten Seite der Steuerkurve, verhindert werden. Eine Führung entlang einer Seite der Steuerkurve kann, insbesondere bei als Rollen ausgebildeten Führungselementen, die Gängigkeit der Werkzeugaufnahme entlang der Steuerkurve verbessern. Bevorzugt ist, wenn ein Führungselement entlang der Oberseite und zwei Führungselemente entlang der Unterseite der Steuerkurve geführt werden. Ein Sperren des Führungselements durch einen zeitgleichen Kontakt zweier sich entgegengesetzt bewegender Seiten der Führungselemente mit der ersten bzw. zweiten Seite der Steuerkurve kann so vorgebeugt werden. Die Führungselemente können alternativ auch nur entlang einer Seite der Steuerkurve geführt werden.

Vorteilhafter Weise ist mindestens eine Führungselementachse, insbesondere eines mittleren Führungselements, einstellbar. Mittels einer einstellbaren Führungselementachse können die Abstände der Führungselemente zueinander an die Abmessungen der Steuerkurve angepasst werden. Eine Einstellbarkeit der Führungselementachse quer zur Steuerkurve kann ein transversales Spiel der Werkzeugaufnahme in der Steuerkurve minimieren. Durch eine Einstellbarkeit der Führungselementachse eines mittleren Führungselements kann ein Verkippen der Werkzeugaufnahme entlang der Steuerkurve verhindert werden.

Nachdem vorstehend auf die Führung des Spanwerkzeuges eingegangen wurde, soll nachfolgend näher auf die Lagerung der Führungsvorrichtung am Kabel eingegangen werden.

In einer Weiterbildung der Erfindung ist mindestens ein Lagerblock, insbesondere zwei Lagerblöcke, zur drehbeweglichen Lagerung des Führungsteils an dem Kabel montierbar. Der mindestens eine Lagerblock kann die Drehbarkeit der Werkzeugaufnahme um das elektrische Kabel ermöglichen. Insbesondere kann über einen oder mehrere Lagerblöcke das Führungsteil am Kabel befestigt werden. Das Führungsteil kann somit auf das Kabel aufgesetzt und so an diesem fixiert werden, dass eine radiale Bewegung, insbesondere eine Drehbarkeit, noch möglich ist.

Gemäß einer konstruktiven Ausgestaltung wird vorgeschlagen, dass der Lagerblock als Teil des Führungsteils ausgebildet ist. Durch den Lagerblock als Teil des Führungsteils kann das Führungsteil auf einfache Art und Weise unmittelbar an dem elektrischen Kabel montiert werden. Der Lagerblock kann zur drehbeweglichen Lagerung an den Steuerelementen angeordnet sein und diese in Querrichtung miteinander verbinden.

In einer vorteilhaften Ausgestaltung ist der Lagerblock mehrteilig, insbesondere zweiteilig, ausgebildet. Ein mehrteiliger Lagerblock kann auf einfache Art und Weise an dem elektrischen Kabel montiert werden. Die einzelnen Teile des Lagerblocks können an dem elektrischen Kabel angeordnet und zur Montage miteinander verbunden werden. Im Unterschied zu einem einteiligen Lagerblock, welcher von einem Ende des elektrischen Kabels auf dieses bis zu einer Position, an welcher der Kabelansatz geformt werden soll, geschoben werden muss, kann ein mehrteiliger Lagerblock eine einfache und zeitsparende Montage an der Stelle, an welcher der Kabelansatz geformt werden soll, ermöglichen. Die Teile eines zweiteiligen Lagerblocks können miteinander drehbeweglich verbunden sein, insbesondere nach Art einer Klappschelle. Miteinander drehbeweglich verbundene Teile des Lagerblocks können eine schnelle Montage ermöglichen und einem Abhandenkommen einzelner Teile vorbeugen. Die einzelnen Teile eines mehrteiligen Lagerblocks können als Lagerblocksegmente ausgebildet sein. Zum Befestigen bzw. Lösen der Lagerblöcke können die einzelnen Lagerblocksegmente auf- bzw. zugeklappt werden. Insbesondere können die Lagerblöcke über Verbindungselemente wie bspw. Schnellspannungsverschlüsse aneinander befestigt und so miteinander verbunden werden. Auf diese Weise lässt sich eine einfache Montage bzw. Demontage am Kabel realisieren.

Bevorzugt umfasst der Lagerblock mindestens eine Lagerbacke, insbesondere zwei Lagerbacken, zur Anpassung an den Außendurchmesser des Kabels. Die Lagerbacke kann im Wesentlichen quer zu der Steuerkurve bewegbar, insbesondere stufenlos bewegbar sein. Ein Abstand der Flächen des Lagerblocks, welche in einem montierten Zustand an dem Kabel anliegen, kann mittels der Lagerbacke auf einfache Art und Weise an den Außendurchmesser des Kabels angepasst werden. Bevorzugt kann die Lagerbacke mittels eines Stellelements bewegt werden. Der Lagerblock kann eine oder mehrere weitere Lagerbacken umfassen. Die weiteren Lagerbacken können bewegbar und/oder nicht bewegbar sein. Eine nicht bewegbare Lagerback kann einstückig mit dem Lagerblock, insbesondere einem Lagerblocksegment, ausgebildet sein.

Besonders bevorzugt weist die Lagerbacke kabelseitig eine gleitende Beschichtung, insbesondere eine Kunststoffbeschichtung auf. Durch eine gleitende Beschichtung, beispielsweise aus Polytetrafluorethylen oder Perfluoralkoxy-Polymeren oder dergleichen, kann der Lagerblock widerstandsarm um das Kabel gedreht werden. Die gleitende Beschichtung kann bevorzugt in Form eines austauschbaren Beschichtungselements realisiert werden. Austauschbare Beschichtungselemente können zur Anpassung an unterschiedlich beschaffene Kabel und/oder zum Austausch abgenutzter Beschichtungen auf einfache Art und Weise ausgetauscht werden. Die gleitende Beschichtung weist bevorzugt eine Dicke im Bereich von 2 mm bis 10 mm auf, insbesondere von 6 mm. Besonders bevorzugt können die Beschichtungen nach Art von Kunststoffbacken ausgebildet sein. Auf diese Weise kann Beschädigungen zuverlässig entgegen gewirkt werden.

Gemäß einer weiteren konstruktiven Ausgestaltung ist mindestens eine Lagerbacke in radialer Richtung einstellbar. Besonders bevorzugt ist die mindestens eine Lagerbacke stufenlos einstellbar. Eine radiale Einstellbarkeit ermöglicht ein konstruktiv einfaches Anpassen des Lagerblocks an den Außendurchmesser des Kabels. Eine stufenlos in radialer Richtung einstellbare Lagerbacke, insbesondere zwei stufenlose radial gegeneinander verstellbare Lagerbacken, können die Einstellbarkeit des Lagerblocks zusätzlich verbessern.

Weiter vorteilhaft ist es, wenn die Neigung zwischen der Steuerkurve und der Kabelachse des Kabels über den Lagerblock, insbesondere stufenlos, einstellbar ist. Über den Lagerblock kann die Neigung, insbesondere der axiale Winkel, zwischen der Steuerkurve und der Kabelachse des Kabels auf besonders einfache Art und Weise eingestellt werden. Durch die Wahl des Neigungswinkels kann die axiale Länge des Ansatzes, insbesondere stufenlos, eingestellt werden. Insbesondere kann eine Einstellung der Ansatzlänge auf einfache Art und Weise erfolgen, wenn zwei bewegliche Lagerbacken vorgesehen sind. Die Führungsvorrichtung kann auf diese Art zur Formung unterschiedlicher in ihrer axialen Länge einstellbarer Kabelansätze eingesetzt werden.

In einer Weiterbildung der Erfindung ist mittels mindestens eines Anschlagteils die Position des Führungsteils an dem Kabel, insbesondere an gegenüberliegenden Enden des Führungsteils, festlegbar. Ein Verrutschen des Führungsteils entlang der Kabelachse kann so verhindert werden. Insbesondere mittels Anschlagteilen an gegenüberliegenden Enden des Führungsteils kann die Position der Führung an dem Kabel auf konstruktiv einfache Art und Weise festgelegt werden. Die Anschlagteile können zur Anpassung an den Außendurchmesser des Kabels angepasst werden.

Weiter vorteilhaft ist es, wenn mindestens ein Anschlagteil gegeneinander spannbare Anschlagsegmente umfasst. Gegeneinander spannbare Anschlagsegmente können das Anschlagteil durch ein gegeneinander erfolgendes Verspannen an dem Kabel festlegen. Mittels Spannelementen können die Anschlagsegmente gegeneinander bewegt und so gespannt werden. Bevorzugt liegen sich die Anschlagsegmente auf gegenüberliegenden Seiten des Kabels gegenüber und werden mittels der Spannelemente, wie beispielsweise Schrauben, Muttern oder dergleichen, zum Spannen aufeinander zubewegt. Die Anschlagsegmente können Haftelemente, insbesondere austauschbare Haftelemente, zur Erzielung einer besseren Haftung des Anschlagteils an dem elektrischen Kabel umfassen. Die Haftelemente können zylindersegmentförmige oder pyramidenstumpfförmige Ausnehmungen zur Anlage an dem Kabel aufweisen. Bevorzugte weisen die Haftelemente eine Dicke im Bereich von 2 mm bis 8 mm auf, insbesondere 5 mm. Die Haftelemente können aus Kunststoff, wie beispielsweise Polyamid, Nylon oder Perlon, bestehen.

Als besonders vorteilhaft hat es sich ferner erwiesen, wenn die Führungsvorrichtung zur Formung eines Kabelansatzes an einer beliebigen Position des elektrischen Kabels montierbar ist. Insbesondere kann die Führungsvorrichtung beispielsweise an einem Kabelende montiert werden, um so einen Kabelansatz am Kabelende zu erzeugen. Alternativ oder zusätzlich kann die Führungsvorrichtung auch beispielsweise in der Mitte oder einem anderen Zwischenbereich eines Kabels angesetzt werden, um so einen Kabelansatz an einer beliebigen Position des Kabels zu formen.

Gelöst wird die vorstehend genannte Aufgabe durch ein Verfahren zur Formung eines Kabelansatzes mit einer Führungsvorrichtung für ein Spanwerkzeug, insbesondere für eine Fräse, welche an einem elektrischen Kabel montiert wird, mit einer das Spanwerkzeug tragenden Werkzeugaufnahme, welche um das elektrische Kabel gedreht und entlang einer Steuerkurve bewegt wird.

Durch das Montieren der Führungsvorrichtung an dem elektrischen Kabel kann die Position des Spanwerkzeugs relativ zu dem Kabel vorgegeben werden. Die das Spanwerkzeug tragende Werkzeugaufnahme kann ein ungewolltes Verkanten des Spanwerkzeugs verhindern. Da die Werkzeugaufnahme entlang der Steuerkurve bewegt wird, kann das Spanwerkzeug reproduzierbar entlang der Kabelachse des elektrischen Kabels geführt werden. Eine ungleichmäßige Änderung des Abstands des Spanwerkzeugs zum Kabel bei einer Bewegung entlang der Kabelachse kann vermieden werden. Über die Ausgestaltung der Steuerkurve kann die Profilform des Kabelansatzes vorgegeben werden. Durch die Drehung der Werkzeugaufnahme um das elektrische Kabel kann das Kabel von allen Seiten bearbeitet werden, ohne dass die Führungsvorrichtung demontiert werden muss. Die Drehung der Werkzeugaufnahme um das elektrische Kabel ermöglicht ein gleichmäßiges Formen des Kabelansatzes um die Kabelachse. Die Hauptursachen der bei einer freihändigen Führung des Spanwerkzeugs auftretenden Unregelmäßigkeiten können mittels der Führungsvorrichtung beseitigt werden. Es kann eine hohe Übereinstimmung zwischen der erzielten und der zu erzielenden Form des Kabelansatzes erreicht werden.

Die in Zusammenhang mit der erfindungsgemäßen Führungsvorrichtung beschriebenen Merkmale können einzeln oder in Kombination auch bei dem Verfahren zur Anwendung kommen. Es ergeben sich die gleichen Vorteile, welche bereits beschrieben wurden. Auch die anhand des Verfahrens beschriebenen Merkmale können bei einer erfindungsgemäßen Führungsvorrichtung Anwendung finden.

Eine besonders vorteilhafte Ausgestaltung des Verfahrens sieht vor, dass durch die Steuerkurve die relative axiale und radiale Lage der Werkzeugaufnahme zu der Kabelachse vorgegeben wird. Die relative axiale und radiale Lage der Werkzeugaufnahme zu der Kabelachse kann auch bei einer Drehung um die Kabelachse reproduziert werden. Unabhängig von der Reihenfolge der Bewegungen des Spanwerkzeugs, kann die gleiche Form des Kabelansatzes erzielt werden. Die Reihenfolge, entlang welcher Richtungen das Spanwerkzeug bei der Formung des Kabelansatzes bewegt wird, kann frei gewählt werden.

Weitere Einzelheiten und Vorteile einer erfindungsgemäßen Führungsvorrichtung sollen nachfolgend anhand eines in den Figuren schematisch dargestellten Ausführungsbeispiels der Erfindung exemplarisch erläutert werden. Darin zeigt:
- Fig. 1: eine Führungsvorrichtung in perspektivischer Ansicht, mit eingespannten Kabel;
- Fig. 2: eine Explosionsdarstellung der Führungsvorrichtung gemäß Fig. 1,
- Fig. 3: eine Werkzeugaufnahme in perspektivischer Ansicht,
- Fig. 4: die Werkzeugaufnahme gemäß Fig. 3 in Explosionsdarstellung,
- Fig. 5: eine schematische Seitenansicht der in einer Steuerkurve geführten Werkzeugaufnahme,
- Fig. 6: einen Lagerblock in einer perspektivischen Ansicht und
- Fig. 7: einen weiteren Lagerblock in perpektivischer Ansicht.

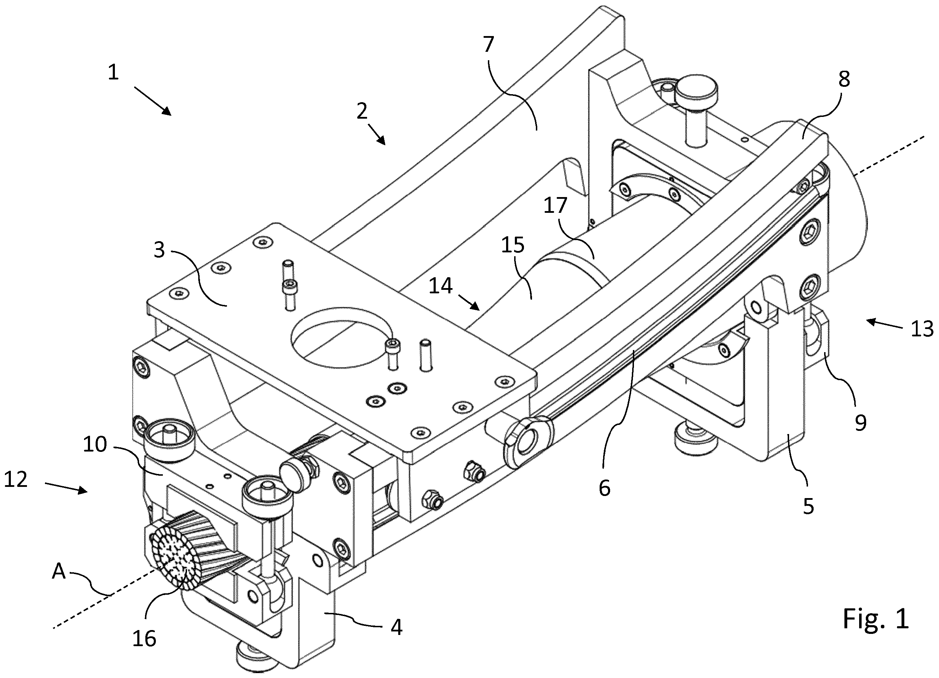

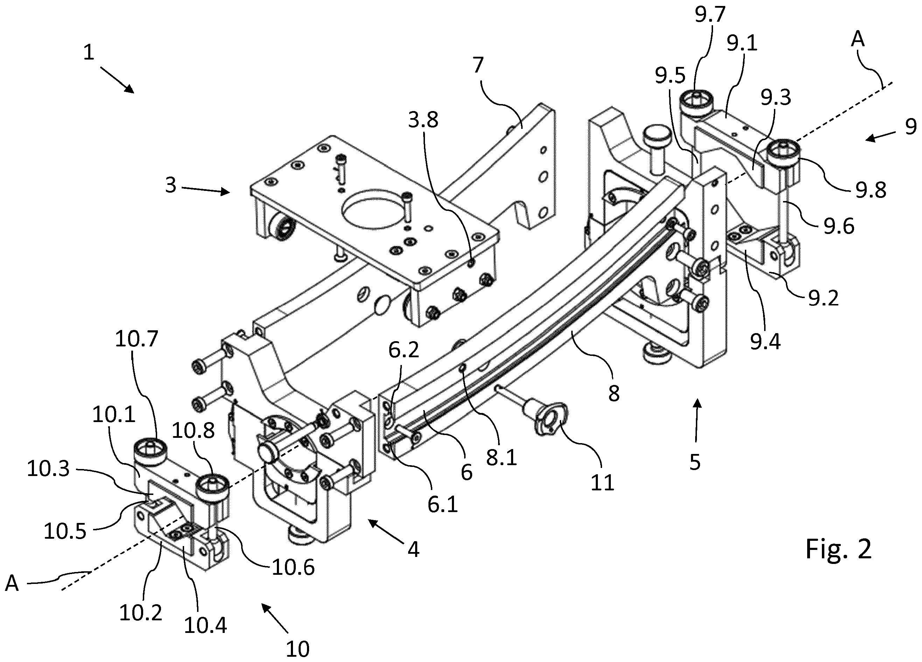

Fig. 1 zeigt in perspektivischer Ansicht eine Führungsvorrichtung 1 für ein nicht näher dargestelltes Spanwerkzeug, insbesondere eine Fräse, in welche zur Formung eines Kabelansatzes 15 an einem elektrischen Kabel 14 montierbar ist. In Fig. 2 ist diese Führungsvorrichtung 1 in einer Explosionsdarstellung dargestellt, wodurch sich die einzelnen Teile und Komponenten der Führungsvorrichtung 1 besser erkennen lassen.

In der Darstellung in Fig. 1 ist die Führungsvorrichtung 1 an dem elektrischen Kabel 14 montiert. Bei dem Ausführungsbeispiel wird die Führungsvorrichtung 1 auf ein Kabelende aufgesetzt. In dem am Kabel 14 montierten Zustand verläuft das Kabel 14 koaxial zu der Achse A der Führungsvorrichtung 1. Vorliegend wird diese Führungsvorrichtung 1 bei der Formung eines Kabelansatzes 15 verwendet, welcher zu der Verbindung zweier Kabel 14 zu einem längeren, einheitlichen Kabel 14 verwendet wird. Alternativ kann die Führungsvorrichtung 1 auch an jeder anderen beliebigen Stelle des Kabels 14 aufgesetzt werden, bspw. um die Kabelseele 16 des Kabels 14 freizulegen. Bislang werden Spanwerkzeuge zur Formung eines Kabelansatzes 15 manuell und freihändig um das Kabels 14 geführt, was zu unregelmäßigen Kabelansätzen 15 führt. Durch die Verwendung der im Folgenden näher beschriebenen Führungsvorrichtung 1 lassen sich hingegen regelmäßige Kabelansätze 15 formen.

Der nähere Aufbau soll nachfolgend anhand der Darstellungen in Fig. 1 und 2 näher beschrieben werden. Einen zentralen Bestandteil der Führungsvorrichtung 1 bildet das Führungsteil 2. An diesem ist eine das Spanwerkzeug tragende Werkzeugaufnahme 3 angeordnet, welche untenstehend genauer beschrieben wird. Die Werkzeugaufnahme 3 ist zusammen mit dem Führungsteil 2 um das elektrische Kabel 14 drehbar.

Das Führungsteil 2 umfasst im dargestellten Ausführungsbeispiel die beiden Lagerblöcke 4, 5, welche im Wesentlichen quer zu der Achse A ausgerichtet sind. Des Weiteren umfasst das Führungsteil 2 die beiden schienenartigen Steuerelemente 7, 8. Diese erstrecken sich im Wesentlichen parallel zur Achse A zwischen den Lagerblöcken 4, 5. Beide Steuerelemente 7, 8 weisen jeweils eine nach Art einer Nut ausgebildete Steuerkurven 6 auf, wobei in den dargestellten Figuren lediglich die Steuerkurve 6 des Steuerelements 8 zu erkennen ist. Es sind auch Ausführungen mit mehreren Steuerkurven 6 je Steuerelement 7, 8 möglich.

In der Steuerkurve 6 wird die Werkzeugaufnahme 3 nach Art einer Profilschiene geführt. Wie in Fig. 2 dargestellt, weist die Steuerkurve 6 Nuten 6.1, 6.2 auf, welche im Querschnitt im Wesentlichen V-förmig ausgebildet sind. Gleichwohl sind auch andere Nutformen der Nuten 6.1, 6.2 möglich. Die Nuten 6.1, 6.2 sind in den Steuerelementen 7,8 jeweils an der Unterseite der Steuerkurve 6, also an der kabelzugewandten Seite und an der Oberseite der Steuerkurve 6, also an der kabelabgewandten Seite angeordnet. In den Nuten 6.1, 6.2 können die Führungselemente 3.3 des Schlittens 3 eingreifen und so in der Steuerkurve 6 geführt werden.

Die Form der Nuten 6.1, 6.2 der nicht gezeigten Steuerkurve 6 des Steuerelements 7 kann von der Profilform der Steuerkurve 6 des Steuerelements 8 abweichen. Insbesondere kann es sich hierbei bspw. um eine einfache rechtwinklige Nut 6.1, 6.2 handeln, wodurch der Konstruktionsaufwand gering gehalten werden kann.

Die Steuerkurve 6 selbst weist einen parabelartigen Verlauf auf. Bei dem parabelartigen Verlauf kann es sich um das Ergebnis einer Tangentialfeldstärkenberechnung handeln, welche darauf ausgelegt ist, Störungen des Tangentialfelds im Bereich des Kabelansatzes 15 zu minimieren. Folgt die Werkzeugaufnahme 3 dieser Form der Steuerkurve 6 kann der Kabelansatz 15 geformt und der Kabelmantel 17 abgesetzt werden.

Die Steuerelemente 7, 8 folgen der Form der Steuerkurve 6, wodurch Material und damit auch Gewicht eingespart wird. Das Steuerelement 8 weist des Weiteren eine Arretierungsausnehmung 8.1 auf, mittels welcher die Werkzeugaufnahme 3 in einer Position, beispielsweise zum Transport der Führungsvorrichtung 1, arretiert werden kann. Die Arretierungsausnehmung 8.1 kann ebenso an dem anderen Steuerelement 7 oder beiden Steuerelementen 7, 8 angeordnet sein.

Zur Arretierung der Werkzeugaufnahme 3 wird diese in eine Position gebracht, in welcher die Arretierungsausnehmung 8.1 und eine Arretierungsausnehmung 3.8 der Werkzeugaufnahme 3 fluchtend zueinander angeordnet sind. In dieser Position kann dann eine bspw. bolzenförmiges Arretierungsteil 11 in die Arretierungsausnehmungen 3.8, 8.1 gesteckt werden. Das Arretierungsteil 11 arretiert die Position der Werkzeugaufnahme 3 entlang der Steuerkurve 6 des Führungsteils. Eine Bewegung der Werkzeugaufnahme 3, beispielsweise während des Transports oder während der Montage der Führungsvorrichtung 1, wird auf diese Weise unterbunden.

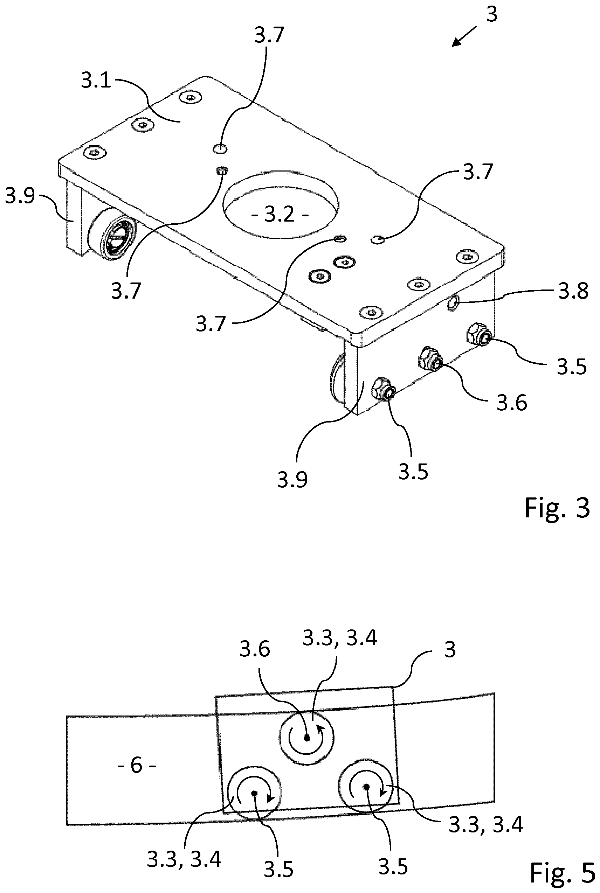

Wie vorstehend beschrieben, ist die Werkzeugaufnahme 3 entlang der Steuerkurve 6 bewegbar. Die Werkzeugaufnahme 3 wird dabei mittels an der Werkzeugaufnahme 3 angeordneten Führungselementen 3.3, 3.4, welche in den Fig. 3 bis 5 näher gezeigt sind, entlang der Steuerkurve 6 geführt.

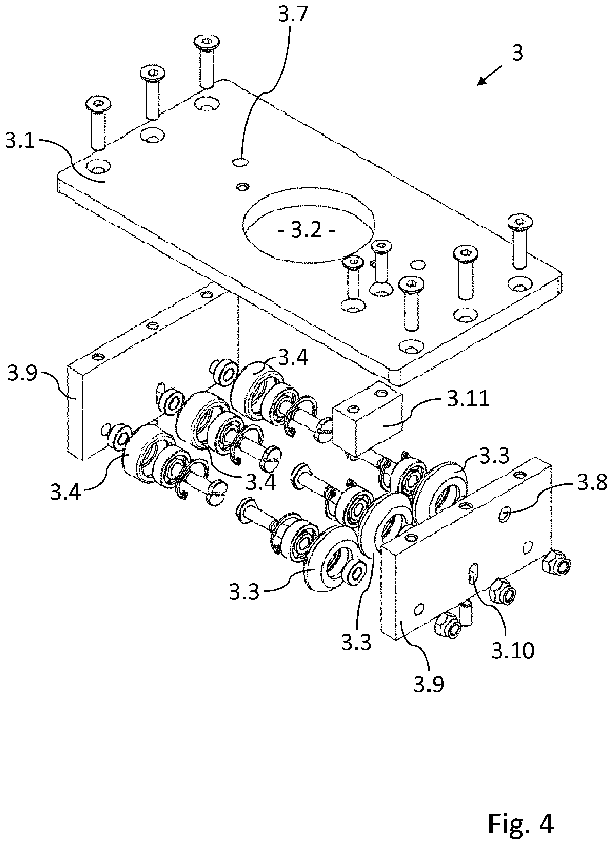

In den Fig. 3 und Fig. 4 ist die nach Art eines Schlittens ausgebildete Werkzeugaufnahme 3 näher dargestellt. Sie umfasst ein im Wesentlichen plattenförmig ausgebildetes Tragelement 3.1, welches das nicht dargestellte Spanwerkzeug tragen kann. Zu diesem Zweck weist das Tragelement 3.1 eine zentriert angeordnete und im Wesentlichen kreisförmige Werkzeugausnehmung 3.2 auf. Durch diese Werkzeugausnehmung 3.2 kann das Spanwerkzeug zumindest teilweise zur spanenden Bearbeitung des Kabels 14 durch die Werkzeugaufnahme 3 hindurchtreten. Die Werkzeugausnehmung 3.2 kann auch anders geformt sein und insbesondere an die Form des Spanwerkzeugs angepasst sein. Der nicht durch die Werkzeugausnehmung 3.2 hindurchtretende übrige Teil des Spanwerkzeugs wird von der Oberfläche des Tragelements 3.1 getragen.

Zur Befestigung des Spanwerkzeugs weist das Tragelement 3.1 Befestigungselemente 3.7 auf, mittels derer das Spanwerkzeug auf dem Tragelement 3.1 befestigt. Bei diesen Befestigungselementen 3.7 kann es sich beispielsweise um Gewindebohrungen, Durchgangsbohrungen, Sacklöcher, Bolzen, Stifte, Gewindestifte, Haken, Ösen oder eine Kombination der genannten Elemente handeln.

An den beiden parallel zur Achse A verlaufenden Seiten der Werkzeugaufnahme 3 erstrecken sich Seitenelemente 3.9 im Wesentlichen rechtwinklig zu der kabelseitigen Seite des Tragelements 3.1. Eines dieser Seitenelemente 3.9 umfasst die bereits oben im Zusammenhang mit dem Arretierungsteil 11 beschriebene Arretierungsausnehmung 3.8.

Parallel zu dem Seitenelement 3.9 ist an dem Tragelement 3.1 ein im Wesentlichen blockförmiger Seitenanschlag 3.11 angeordnet. Im montierten Zustand der Werkzeugaufnahme 3 ist das Steuerelement 8 zwischen dem Seitenelement 3.9 und dem Seitenanschlag 3.11 angeordnet. Diese Anordnung beschränkt den Bewegungsbereich der Werkzeugaufnahme 3 quer zu dem Steuerelement 8. Weicht die Position der Werkzeugaufnahme 3 quer zu dem Steuerelement 8 stark von der durch die Steuerkurve 6 vorgegebenen Sollposition der Werkzeugaufnahme 3 ab, kommt es zu einem Kontakt des Steuerelements 8 mit dem Seitenelement 3.9 oder dem Seitenanschlag 3.11. Eine weitere Querbewegung der Werkzeugaufnahme 3 wird verhindert. Im dargestellten Beispiel stellt der Seitenanschlag 3.11 lediglich einen Sicherheitsmechanismus dar. Die eigentliche Querführung der Werkzeugaufnahme 3 erfolgt mittels der Führungselemente 3.3, 3.4. Erst bei einem Versagen dieser Querführung, beispielsweise aufgrund eines Materialversagens, greift die Querführung mittels des Seitenanschlags 3.11 und des Seitenelements 3.9.

Zur Führung der Werkzeugaufnahme 3 in den Steuerkurven 6 der Steuerelemente 7, 8 sind an den Seitenelemente 3.9 Führungselemente 3.3, 3.4 angeordnet. In dem hier dargestellten Ausführungsbeispiel handelt es sich bei diesen Führungselementen 3.3, 3.4 jeweils um drei Rollen. Als Rollen ausgebildete Führungselemente 3.3, 3.4 weisen dabei einen geringen Widerstand bei der Bewegung der Werkzeugaufnahme 3 entlang der Steuerkurve 6 auf. Dieser Widerstand kann durch die Verwendung kugelgelagerter Rollen, wie hier dargestellt, noch weiter verringert werden. Auf diese Weise wird eine vergleichsweise leichtgängig bewegbare Werkzeugaufnahme 3 realisiert.

Die Führungselemente 3.3, 3.4 sind in den Nuten 6.1, 6.2 der Steuerkurven 6 geführt. Diese komplementär zu dem nutförmigen Profil ausgebildeten Führungselemente 3.3, 3.4 der Werkzeugaufnahme 3 bewirken bei einer Bewegung der Werkzeugaufnahme 3 entlang der Steuerkurve 6 eine selbstständige Zentrierung der Werkzeugaufnahme 3 quer zur Steuerkurve 6. Eine Verschiebung der Werkzeugaufnahme 3 quer zur Steuerkurve 6 führt aufgrund der Form der Nut und der Form der Führungselemente 3.3 zu einer Kraft, welche dieser Verschiebung entgegenwirkt. Bei einer Selbstzentrierung durch beide Steuerkurven 6 der Steuerelemente 7, 8 könnte es aufgrund von Fertigungstoleranzen zu einem Unterschied zwischen dem Abstand der Steuerkurven 6 der Steuerelemente 7, 8 und dem Abstand der Führungselemente 3.3, 3.4 der Werkzeugaufnahme 3 kommen. Eine derartige Abweichung der Abstände würde bei einer Selbstzentrierung durch beide Steuerkurven 6 der Steuerelemente 7, 8 zu einem Aufheben der Selbstzentrierungseffekte führen. Denn wenn die Führungselemente 3.3 in der Steuerkurve 6 des Steuerelements 8 zentriert wären, wären aufgrund der Unterschiede der Abstände zwischen den Führungselementen 3.3, 3.4 und den Steuerkurven 6 der Steuerelemente 7, 8 die Führungselemente 3.4 in der Steuerkurve 6 des Steuerelementes 7 gerade nicht zentriert. Entsprechend würde eine Kraft auf die Werkzeugaufnahme 3 ausgeübt werden, welche die Werkzeugaufnahme 3 quer zur Steuerkurve 6 bewegt. Eine solche Bewegung würde jedoch wiederum eine ihr entgegengesetzte Kraft hervorrufen, welche durch die Steuerkurve 6 bewirkt würde. Derartige entgegengesetzte Kräfte zur Zentrierung der Werkzeugaufnahme 3 lassen sich durch eine Selbstzentrierung, welche lediglich über eine der Steuerkurven 6 erfolgt, verhindern.

Die Führungselemente 3.3, 3.4 der sich gegenüberliegenden Seitenelemente 3.9 unterscheiden sich in ihren jeweiligen Formen. Dabei weisen die in den Fig. 3 und Fig. 4 links dargestellten Führungselemente 3.4 im Wesentlichen plane Laufflächen auf, d. h. die Rollen sind als Zylinderrollen ausgebildet. Die in Fig. 3 und Fig. 4 rechts dargestellten Führungselemente 3.3 sind hingegen nach Art von Doppelkonen ausgeformt, wobei der Bereich des größten Durchmessers im mittleren Bereich der Rolle liegt. Neben den beiden dargestellten Formen der Führungselemente 3.3, 3.4 sind auch andere Formen der Führungselemente möglich, beispielsweise einfache Konusformen oder parabelförmige Querschnitte. Jedes Führungselement 3.3, 3.4 kann dabei je nach Bedarf angepasst sein. Ebenso können die Führungselemente 3.3, 3.4 jeweils die gleiche Form aufweisen und müssen nicht, wie dargestellt, unterschiedliche Formen aufweisen.

In dem dargestellten Ausführungsbeispiel werden die beiden äußeren Führungselemente 3.3, 3.4 jeweils entlang einer ersten Seite der Steuerkurve 6 geführt, welche dem Kabel 14 zugewandt und in Fig. 5 als untere Seite der Steuerkurve 6 dargestellt ist. Das mittlere Führungselement 3.3, 3.4 wird entlang einer gegenüberliegenden, zweiten Seite der Steuerkurve 6 geführt, welche von dem Kabel 14 abgewandt und in Fig. 5 als obenliegend dargestellt ist.

Wie zu erkennen ist, liegen die Führungselementachsen 3.5 der Führungselemente 3.3, 3.4, welche entlang der ersten Seite, insbesondere in der Nut 6.1 der Steuerkurve 6 geführt werden, in einer anderen Ebene als die Führungselementachse 3.6 der Führungselemente 3.3, 3.4, welche entlang der zweiten Seite, insbesondere in der Nut 6.2, der Steuerkurve 6 geführt werden. Bei dieser Anordnung kommen die Führungselemente 3.3, 3.4 lediglich mit der Seite der Steuerkurve 6 in Kontakt, entlang der sie geführt werden. Ein Verhaken der Führungselemente 3.3, 3.4, welches auftritt, wenn ein Führungselement 3.3, 3.4 mit beiden Seiten der Steuerkurve 6 in Kontakt kommt, kann so verhindert werden. Ein solches Haken würde dabei durch den Umstand verursacht werden, dass sich gegenüberliegende Seiten eines jeden rotierenden Führungselements 3.3, 3.4 in entgegengesetzte Richtungen bewegen. Kommen diese beiden sich gegenüberliegenden Seiten des Führungselements 3.3, 3.4 mit beiden Seiten der Steuerkurve 6 in Kontakt, würde die Drehbewegung des Führungselements 3.3, 3.4 auf einer Seite zu einem Abbremsen führen. Durch die Führung mindestens eines Führungselements 3.3, 3.4 entlang der Nut 6.1 und mindestens eines Führungselements 3.3, 3.4 entlang der Nut 6.2 der Steuerkurve 6 und dem damit verbundenen Abstand zu der jeweils anderen Seite der Steuerkurve 6, kann dieses abbremsen und damit das Haken auf einfache Art und Weise verhindert werden.

Um den Abstand der Führungselemente 3.3, 3.4 von den jeweiligen Seiten der Steuerkurve 6, entlang welcher sie geführt werden, zu minimieren und zugleich ein Spiel der Werkzeugaufnahme 3 bei der Führung entlang der Steuerkurve 6 zu minimieren, ist die Führungselementachse 3.6 des mittleren Führungselements 3.3, 3.4 einstellbar. Die Führungselementachse 3.6, um welche das mittlere Führungselement 3.3, 3.4 drehbar gelagert ist, ist in einer nach Art eines Langlochs ausgebildeten Ausnehmung 3.10 angeordnet. Entlang der Längsachse dieser Ausnehmung 3.10 kann die Führungselementachse 3.6 in ihrer Position eingestellt werden. Die Führungselementachse 3.6 wird hierzu so lange von der durch die Führungselementachsen 3.5 der anderen Führungselemente 3.3, 3.4 gebildeten Ebene entlang der Ausnehmung 3.10 wegbewegt, bis sich der gewünschte Abstand einstellt. In dieser Position kann die Lage der Führungselementachse 3.6 mit aus dem Stand der Technik bekannten Mitteln arretiert werden. Beispielsweise kann die Arretierung mittels eines Anziehens der in der Figur dargestellten Schrauben- und Mutterverbindung arretiert werden.

Die Steuerelemente 7, 8 des Führungsteils 2 sind mittels lösbarer Verbindungselemente, wie bspw. Schrauben oder Bolzen an den Lagerblöcken 4,5 befestigt. Insbesondere werden die beiden Steuerelemente 7,8 über die Lagerblöcke 4,5 miteinander verbunden. Die Lagerblöcke 4, 5 sind somit als lösbarer Teil des Führungsteils 2 ausgebildet. Das Führungsteil 2 kann alternativ aber auch einteilig mit den Lagerblöcken 4, 5 ausgebildet sein. Die Lagerblöcke 4, 5 sind zur drehbeweglichen Lagerung des Führungsteils 2 an den Kabel 14 montierbar.

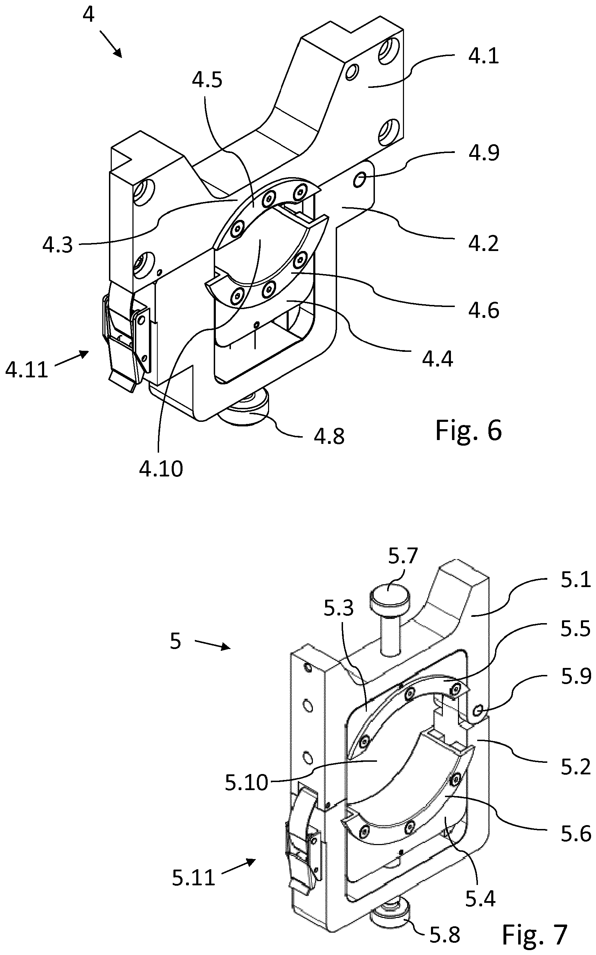

Im Folgenden wird anhand der Fig. 6 und Fig. 7 auf die nähere Ausgestaltung der Lagerblöcke 4, 5 eingegangen. Hinsichtlich ihrer grundlegenden Funktionalität stimmen die beiden Lagerblöcke 4, 5 überein, unterscheiden sich jedoch in ihrer konstruktiven Ausgestaltung.

So weist der in Fig. 6 dargestellte Lagerblock 4 eine im Wesentlichen T-artige Form auf. Der den T-Strich bildende obere Bereich des Lagerblocks 4 umfasst im dargestellten Beispiel Verbindungsstellen, über welche der Lagerblock 4 mit den Stirnseiten der Steuerelemente 7, 8 verbunden ist. Ausgehend von dem den T-Strich bildenden Teil des Lagerblocks 4 verjüngt sich der Lagerblock 4 materialsparend. Diese Verjüngung ist möglich, da der Lagerblock 4 zur Montierung an der Kabelseele 16 vorgesehen ist. Da der Außendurchmesser des Kabels 14 im Bereich der freigelegten Kabelseele 16 kleiner ist als der Außendurchmesser des Kabels 14 im Bereich des Kabelmantels 17, kann die Montageausnehmung 4.10 vergleichsweise klein sein.

Im dargestellten Ausführungsbeispiel ist der Lagerblock 4 mit den beiden Lagerblocksegmenten 4.1, 4.2 zweiteilig ausgebildet, gleichwohl kann der Lagerblock 4 darüber hinaus auch noch weitere Lagerblocksegmente umfassen. Die beiden Lagerblocksegmente 4.1, 4.2 sind über eine Achse 4.9 miteinander drehbeweglich verbunden. Zur Montage des Lagerblocks 4 kann dieser durch ein gegenseitiges Verschwenken der Lagerblocksegmente 4.1, 4.2 aufgeklappt werden. Ein Lagerblocksegment 4.1, 4.2 kann auf diese Weise einfach zur Montage an dem Kabel 14 angelegt werden. Durch ein Zuklappen des Lagerblocks 4, d. h. ein aufeinander Zuschwenken der beiden Lagerblocksegmente 4.1, 4.2 um die Achse 4.9, wird das Kabel 14 in der Montageausnehmung 4.10 angeordnet. Mittels eines Schließelements 4.11, welches auf der zur Achse 4.9 gegenüberliegenden Seite des Lagerblocks 4 angeordnet ist und zwischen den beiden Lagerblocksegmenten 4.1, 4.2 wirkt, kann ein erneutes Aufklappen des Lagerblocks 4 verhindert werden. Dieses Schließelement 4.11 kann bspw. nach Art eines Schnellspanners ausgebildet sein.

Die kabelseitigen Bereiche der Lagerblocksegmente 4.1, 4.2 werden durch die Lagerbacken 4.3, 4.4 gebildet. Im dargestellten Ausführungsbeispiel weisen diese Lagerbacken 4.3, 4.4 eine gleitende Beschichtung 4.5, 4.6 auf. Diese Beschichtung 4.5, 4.6 weist eine im Vergleich zum Material der Lagerbacken 4.3, 4.4 geringeren Reibungskoeffizienten auf. Auf diese Weise wird die zur Drehung des Führungsteils 2 erforderliche Kraft reduziert. Bei den Beschichtungen 4.5, 4.6 handelt es sich dabei bevorzugt um Kunststoffbeschichtungen, welche beispielsweise aus PTFE oder PFA bestehen können.

Die Beschichtung 4.5, 4.6 sind im dargestellten Ausführungsbeispiel als austauschbare Beschichtungselemente 4.5, 4.6 ausgebildet. Diese sind mit entsprechenden aus der Stand der Technik bekannten Befestigungsvorrichtungen an den Lagerbacken 4.3, 4.4 befestigt. Austauschbare Beschichtungen 4.5, 4.6 ermöglichen einen einfachen Austausch der Beschichtungen 4.5, 4.6, beispielsweise um abgenutzte Beschichtungselemente 4.5, 4.6 durch neue Beschichtungselemente 4.5, 4.6 zu ersetzen. Des Weiteren können mittels austauschbaren Beschichtungselementen 4.5, 4.6 unterschiedliche Beschichtungen 4.5, 4.6 für den Lagerblock 4 zur Verfügung gestellt werden. Dies ist insbesondere von Vorteil, da der Reibungskoeffizient von der Beschichtung 4.5, 4.6 und dem mit der Beschichtung 4.5, 4.6 in Kontakt stehenden Material des Kabels 14 abhängt. Austauschbare Beschichtungen 4.5, 4.6 erlauben es insoweit, das Material der Beschichtung 4.5, 4.6 der Lagerblocksegmente 4.1, 4.2 in Abhängigkeit des Materials des Kabels 14 derart zu wählen, dass ein möglichst geringer Reibungskoeffizient erzielt wird.

Zur Anpassung an den Außendurchmesser des Kabels 14 umfasst der Lagerblock 4 die Lagerbacke 4.4. Diese ist mittels des Stellelements 4.8 derart linear beweglich, dass sich die Abmessung der Montageausnehmung 4.10 über die Position der Lagerbacke 4.4 einstellen lässt. Zur Anpassung an einen kleinen Außendurchmesser des Kabels 14 wird die Lagerbacke 4.4 in Richtung der einstückig mit dem Lagerblocksegment 4.1 verbundenen und nicht beweglichen Lagerbacke 4.3 bewegt. Auf diese Weise wird der Abstand zwischen den Lagerbacken 4.3, 4.4 und somit auch die Größe der Montageausnehmung 4.10 verringert. Zur Anpassung an ein Kabel 14 mit größerem Außendurchmesser wird die Lagerbacke 4.4 mittels des Stellelements 4.8 entsprechend von der Lagerbacke 4.3 wegbewegt, was zu einer Vergrößerung der Montageausnehmung 4.10 führt.

Bei dem Stellelement 4.8 kann es sich um ein Druckelement handeln, welches zur Einstellung der Position der Lagerbacke 4.4 in den Lagerblock 4 hineingedrückt oder aus selbigem hinausgezogen wird. Eine Einstellung der Position der Lagerbacke 4.4 kann beispielsweise auch mittels Rastelementen erfolgen, welche eine stufenweise Einstellung der Lagerbacke 4.4 ermöglicht. Alternativ kann die Einstellung der Lagerbacke 4.4 in radialer Richtung auch stufenlos erfolgen. Hierbei hat es sich insbesondere als vorteilhaft erwiesen, das Stellelement 4.8 nach Art einer Gewindespindel auszubilden. Ein als Gewindespindel ausgebildetes Stellelement 4.8 setzt eine Drehbewegung in eine, insbesondere stufenlose, radial gerichtete lineare Bewegung der Lagerbacke 4.4 um.

In Fig. 7 ist der Lagerblock 5 gezeigt, welcher zur Lagerung des Führungsteils 2 an dem zum Lagerblock 4 gegenüberliegenden Ende des Führungsteils 2 dient. Der Lagerblock 5 wird mittels der seitlich an ihm vorgesehenen Befestigungsstellen auf aus dem Stand der Technik bekannter Art und Weise mit den Seiten der Steuerelemente 7, 8 verbunden, wie in Fig. 1 und 2 gezeigt. Wenngleich sich die Lagerblöcke 4, 5, insbesondere hinsichtlich ihrer konstruktiven Ausgestaltung, voneinander unterscheiden, so können bei einer erfindungsgemäßen Führungsvorrichtung 1, anders als in dem hier dargestellten Ausführungsbeispiel, dennoch übereinstimmende Lagerblöcke 4, 5 vorgesehen sein.

In Bezug auf die Funktionsweise und die Ausgestaltung der einzelnen Komponenten des Lagerblocks 5, insbesondere der Lagerblocksegmente 5.1, 5.2, der Beschichtungen 5.5, 5.6, der Lagerbacke 5.4, des Stellelements 5.8, der Achse 5.9, der Montageausnehmung 5.10 sowie des Schließelements 5.11, gelten die Ausführungen zu dem Lagerblock 4 in analoger Weise.

Der funktionelle Hauptunterschied des Lagerblocks 5 zu dem Lagerblock 4 besteht darin, dass beide Lagerbacken 5.3, 5.4 in radialer Richtung einstellbar sind. Zur Einstellung der Lagerbacke 5.3 weist der Lagerblock 5 ein weiteres Stellelement 5.7 auf. Bei diesem Stellelement 5.7 kann es sich um das gleiche Stellelement 5.8 handeln, mittels welchem die Lagerbacke 5.4 einstellbar ist. Ebenso können jedoch auch unterschiedliche Stellelemente 5.7, 5.8 vorgesehen sein. Beispielsweise kann eine stufenweise Einstellung der Lagerbacke 5.3 mittels des Stellelements 5.7 und eine stufenlose Einstellung der Lagerbacke 5.4 mittels des Stellelements 5.8 vorgesehen sein.

Über den Lagerblock 5 ist die Neigung zwischen der in Fig. 1 und Fig. 2 dargestellten Steuerkurve 6 und der Kabelachse A des Kabels 14 einstellbar. Hierzu werden die Lagerbacken 5.3, 5.4 mittels der Stellelemente 5.7, 5.8 derart eingestellt, dass beide Lagerbacken 5.3, 5.4 mittels der Beschichtungen 5.5, 5.6 an dem Kabel 14 anliegen, die Position der Montageausnehmung 5.10 jedoch relativ zu den Lagerblocksegmenten 5.1, 5.2 verschoben wird. Da die Lage der Kabelachse A relativ zu der Steuerkurve 6 durch die Lage der Montageausnehmungen 4.10 und 5.10 zueinander festgelegt ist, führt eine Verschiebung der Montageausnehmung 5.10 entlang der einstellbaren Richtung zu einer Veränderung der Neigung und insbesondere zu einer Verstellung des axialen Winkels zwischen der Steuerkurve 6 und der Achse A des Kabels 14. Eine steilere Neigung zwischen der Steuerkurve 6 und der Achse A des Kabels 14 bewirkt dabei eine Verkürzung des zu formenden Kabelansatzes 15. Denn durch eine größere Neigung der Steuerkurve 6 wird das mittels der Werkzeugaufnahme 3 entlang dieser geführte Spanwerkzeug lediglich in einen kleineren Bereich der Steuerkurve 6 derart nah an das Kabel 14 herangeführt, dass das Spanwerkzeug das Kabel 14 spanend bearbeiten kann. Analog führt eine Verringerung der Neigung zwischen der Steuerkurve 6 und der Kabelachse A des Kabels 14 zu einer Verlängerung des zu formenden Kabelansatzes. Denn durch eine Verringerung der Neigung werden Bereiche der Steuerkurve 6, welche in der Ausgangsneigung zu weit von dem Kabel 14 entfernt sind, als dass entlang der Steuerkurve 6 geführte Spanwerkzeug das Kabel 14 bearbeiten könnte, in radialer Richtung näher an das Kabel 14 herangeführt, so dass das Spanwerkzeug auch in diesen Bereichen der Steuerkurve das Kabel 14 bearbeiten kann. Besonders vorteilhaft ist hierbei eine stufenlose Einstellung der Neigung zwischen der Steuerkurve 6 und der Kabellachse A des Kabels 14. Dies erlaubt eine frei wählbare Einstellung der Neigung und damit der Länge des zu formenden Kabelansatzes 15.

Alternativ kann eine Einstellbarkeit der Neigung zwischen der Steuerkurve 6 und der Kabelachse A des Kabels 14 auch mittels einer verschiebbaren Anordnung der Steuerelemente 7, 8 an dem Lagerblock 4, 5 erfolgen. Die relative Lage der Montageausnehmung 4.10, 5.10 muss hierzu nicht veränderbar sein, kann es gleichwohl dennoch sein. Die Neigung der Steuerkurve 6 kann auf diese Weise über den relativ zur Kabelachse A des Kabels 14 radial feststehenden Lagerblock 4, 5 einstellbar sein.

Ebenfalls Teil der Führungsvorrichtung 1 sind die beiden neben dem Führungsteils 2 in Fig. 1 und Fig. 2 dargestellten Anschlagteile 9, 10. Mittels dieser Anschlagteile 9, 10 ist die Position des Führungsteils 2 an dem Kabel 14, insbesondere an den gegenüberliegenden Enden 12, 13 des Führungsteils 2, festlegbar. In konstruktiver Hinsicht unterscheiden sich die dargestellten Anschlagteile 9 und 10 in ihren Abmessungen, gleichwohl können auch identische Anschlagteile 9, 10 genutzt werden. Das größer dimensionierte Anschlagteil 9 ist zur Befestigung an den äußeren Kabelmantel 17 des elektrischen Kabels 14 ausgelegt. Das kleiner dimensionierte Anschlagteil 10 dient der Anordnung an der Kabelseele 16 des elektrischen Kabels 14 im Bereich des zu formenden Kabelansatzes 15.

Zur Festlegung der Position des Führungsteils 2 an dem elektrischen Kabel 14 reicht eines der Anschlagteile 9, 10 aus. Es hat sich jedoch als besonders vorteilhaft erwiesen, beiden Anschlagteile 9, 10 an gegenüberliegenden Enden 12, 13 des Führungsteils 2 anzuordnen. Denn durch zwei Anschlagteile 9, 10 kann die Position des Führungsteils 2 auf besonders einfache Weise in beiden Richtungen entlang des Kabels 14 festgelegt werden. Bei der Montage der Führungsvorrichtung 1 kann dabei zuerst das Führungsteil 2 an dem Kabel 14 montiert und im Anschluss hieran die beiden Anschlagteile 9, 10 oder eines der Anschlagteile 9, 10 montiert werden. Als besonders vorteilhaft hat es sich jedoch erwiesen, zunächst eines der Anschlagteile 9, 10 an dem elektrischen Kabel 14, dann das Führungsteil 2 an dem Kabel 14 bündig mit dem bereits montierten Anschlagteil 9, 10 und abschließend das zweite Anschlagteil 9, 10 bündig mit dem Führungsteil 2 zu montieren. Auf diese Art und Weise kann die Position des Führungsteils 2 mit besonders kleinem Spiel an dem Kabel 14 festgelegt werden.

Die Anschlagteile 9, 10 umfassen gegeneinander spannbare Anschlagsegmente 9.1, 9.2, 10.1, 10.2. Diese können zur Montage getrennt voneinander an dem Kabel 14 angeordnet und mittels der Spannelemente 9.5, 9.6, 10.5, 10.6 gegeneinander verspannt werden. Die Spannelemente 9.5, 9.6, 10.5, 10.6 sind hierzu jeweils schwenkbar an einem der Anschlagsegmenten 9.1, 9.2, 10.1, 10.2 angelenkt. Mittels eines nach Art einer Rändelmutter ausgebildeten Gegenspannelements 9.7, 9.8, 10.7, 10.8 kann in Zusammenwirkung mit dem nach Art einer Gewindestange ausgebildeten Spannelement 9.5, 9.6, 10.5, 10.6 eine Spannkraft zwischen den Anschlagsegmenten 9.1, 9.2, 10.1, 10.2 aufgebracht werden. Durch dieses Spannen der Anschlagsegmente 9.1, 9.2, 10.1, 10.2 wird die Lage der Anschlagteile 9, 10 an dem Kabel 14 und ebenso die Lage des zwischen ihnen befindlichen Führungsteils 2 festgelegt.

Die dargestellten Anschlagsegmente 9.1, 9.2, 10.1, 10.2 umfassen zusätzliche, insbesondere austauschbare, Haftelemente 9.3, 9.4, 10.3, 10.4, welche die Haftung der Anschlagteile 9, 10 an dem Kabel 14 verbessern können. Die Haftelemente 9.3, 9.4, 10.3, 10.4 wirken einem ungewollten Verrutschen der Anschlagteile 9, 10 entlang des Kabels 14 entgegen. Auf diese Weise verbessern die Haftelemente 9.3, 9.4, 10.3, 10.4 die Festlegbarkeit der Position des Führungsteils 2.

Mit Hilfe der vorstehend beschriebenen Führungsvorrichtung 1 ist es möglich, reproduzierbar regelmäßig geformte Kabelansätze 15 zu formen. Zur Formung des Kabelansatzes 15 ist die als Schlitten ausgebildete Werkzeugaufnahme 3 um das nicht dargestellte elektrische Kabel 14 drehbar und entlang der Steuerkurve 6 bewegbar. Die Führung der Werkzeugaufnahme 3 erfolgt mittels des Führungsteils 2 sowohl um das Kabel 14 als auch entlang der Steuerkurve 6. Dabei wird die Werkzeugaufnahme 3 mittels der Steuerkurve 6 zum einen in axialer Richtung entlang des elektrischen Kabels 14 geführt. Zum anderen ergibt sich durch die Steuerkurve 6 für jede Position der Werkzeugaufnahme 3 entlang der Kabelachse A ein vorgegebener radialer Abstand. Das mittels der Werkzeugaufnahme 3 entlang der Steuerkurve 6 geführte Spanwerkzeug kann das Kabel 14 derart bearbeiten, dass sich reproduzierbar eine dem Verlauf der Steuerkurve 6 entsprechende Form des Kabelansatzes 15 des elektrischen Kabels 14 ergibt.

Die Bewegung der Werkzeugaufnahme 3 und somit auch des von ihr getragenen Spanwerkzeugs erfolgt unabhängig von der Drehposition des Führungsteils 2 um die Achse A stets entlang der Steuerkurve 6. Durch ein Drehen der Steuerkurve 6 zusammen mit der sich entlang ihr bewegbaren Werkzeugaufnahme 3 um die Achse A, kann das Kabel 14 von allen Seiten gleichmäßig und dem gleichen Verlauf folgend bearbeitet werden.

Die Lage des Führungsteils 2 wird mittels der Anschlagteile 9, 10, an den gegenüberliegenden Enden 12, 13 des Führungsteils 2 festgelegt. Auf diese Weise kann sichergestellt werden, dass die Steuerkurve 6 nach einer vollständigen Drehung um die Kabelachse A wieder die gleiche Position relativ zum Kabel 14 einnimmt, ohne entlang der Kabelachse A verschoben zu werden. Da durch die Steuerkurve 6 die relative axiale und radiale Lage der Werkzeugaufnahme 3 zu der Kabelachse auch bei einer Drehung um die Kabelachse A reproduzierbar ist, kann die Reihenfolge, entlang welcher Richtungen das Spanwerkzeug bei der Formung des Kabelansatzes 15 bewegt wird, frei gewählt werden.

So kann die das Spanwerkzeug tragende Werkzeugaufnahme 3 beispielsweise zunächst entlang der Kabelachse A geführt, anschließend um einen Winkel um das Kabel 14 gedreht und erneut entlang der Kabelachse A geführt werden. Diese Schritte können solange abwechselnd wiederholt werden, bis das Kabel 14 von allen Seiten bearbeitet wurde. Alternativ kann die Werkzeugaufnahme 3 zunächst in einer gleichbleibenden Position entlang der Kabelachse A vollständig um den Kabelumfang geführt werden. Anschließend kann die Position entlang der Steuerkurve 6 geändert und die Werkzeugaufnahme 3 erneut um die Kabelachse A gedreht werden. Auch diese Schritte lassen sich solange abwechselnd durchführen, bis die Formung des Kabelansatzes 15 abgeschlossen ist. Ebenso könnte die Formung des Kabelansatzes mittels einer Kombination der beschriebenen Bearbeitungsreihenfolgen erfolgen.

Aufgrund der durch die Führungsvorrichtung 1 reproduzierbaren Position des Spanwerkzeugs relativ zu dem elektrischen Kabel 14, ist die Form des Kabelansatzes 15 nicht von der gewählten Bearbeitungsreihenfolge oder dem Geschick der das Spanwerkzeug führenden Person abhängig. Vielmehr ist die Form des Kabelansatzes 15 durch die Führungsvorrichtung 1 vorgegeben.

Über eine Verstellung der Neigung zwischen der Steuerkurve 6 und der Kabelachse A des Kabels 14 mittels des Lagerblocks 5 kann zudem die Länge des Kabelansatzes 15 eingestellt werden.

### Bezugszeichen:

- 1: Führungsvorrichtung
- 2: Führungsteil
- 3: Werkzeugaufnahme
- 3.1: Tragelement
- 3.2: Werkzeugausnehmung
- 3.3: Führungselement
- 3.4: Führungselement
- 3.5: Führungselementachse
- 3.6: Führungselementachse
- 3.7: Befestigungselement
- 3.8: Arretierungsausnehmung
- 3.9: Seitenelement
- 3.10: Ausnehmung
- 3.11: Seitenanschlag
- 4: Lagerblock
- 4.1: Lagerblocksegment
- 4.2: Lagerblocksegment
- 4.3: Lagerbacke
- 4.4: Lagerbacke
- 4.5: Beschichtung
- 4.6: Beschichtung
- 4.8: Stellelement
- 4.9: Achse
- 4.10: Montageausnehmung
- 4.11: Schließelement
- 5: Lagerblock
- 5.1: Lagerblocksegment
- 5.2: Lagerblocksegment
- 5.3: Lagerbacke
- 5.4: Lagerbacke
- 5.5: Beschichtung
- 5.6: Beschichtung
- 5.7: Stellelement
- 5.8: Stellelement
- 5.9: Achse
- 5.10: Montageausnehmung
- 5.11: Schließelement
- 6: Steuerkurve
- 6.1: Nut
- 6.2: Nut
- 7: Steuerelement
- 8: Steuerelement
- 8.1: Arretierungsausnehmung
- 9: Anschlagteil
- 9.1: Anschlagsegment
- 9.2: Anschlagsegment
- 9.3: Haftelement
- 9.4: Haftelement
- 9.5: Spannelement
- 9.6: Spannelement
- 9.7: Gegenspannelement
- 9.8: Gegenspannelement
- 10: Anschlagteil
- 10.1: Anschlagsegment
- 10.2: Anschlagsegment
- 10.3: Haftelement
- 10.4: Haftelement
- 10.5: Spannelement
- 10.6: Spannelement
- 10.7: Gegenspannelement
- 10.8: Gegenspannelement
- 11: Arretierungsteil
- 12: Ende
- 13: Ende
- 14: Kabel
- 15: Kabelansatz
- 16: Kabelseele
- 17: Kabelmantel

- A: Achse

## Patentansprüche

1. Führungsvorrichtung für ein motorgetriebenes Spanwerkzeug, insbesondere für eine Fräse, welche zur Formung eines Kabelansatzes (15) an einem elektrischen Kabel (14) mit einer Kabelachse (A) montierbar ist, mit einer das Spanwerkzeug tragenden Werkzeugaufnahme (3), welche um das elektrische Kabel (14) drehbar und entlang einer Steuerkurve (6) entlang der Kabelachse (A) bewegbar ist, wobei die Steuerkurve (6) einen halbparabelartigen Verlauf aufweist.

2. Führungsvorrichtung nach Anspruch 1, **dadurch gekennzeichnet, dass** die Neigung zwischen der Steuerkurve (6) und der Kabelachse (A) des Kabels (14) variabel einstellbar ist.

3. Führungsvorrichtung nach einem der vorhergehenden Ansprüche, **dadurch gekennzeichnet, dass** die Werkzeugaufnahme (3) an einem Führungsteil (2) angeordnet ist.

4. Führungsvorrichtung nach Anspruch 3, **dadurch gekennzeichnet, dass** die Werkzeugaufnahme (3) zusammen mit dem Führungsteil (2) um das elektrische Kabel (14) drehbar ist.

5. Führungsvorrichtung nach einem der Ansprüche 3 oder 4, **dadurch gekennzeichnet, dass** das Führungsteil (2) mehrere Steuerelemente (7, 8) umfasst, welche jeweils mindestens eine Steuerkurve (6) aufweisen.

6. Führungsvorrichtung nach einem der vorhergehenden Ansprüche, **dadurch gekennzeichnet, dass** die Werkzeugaufnahme (3) als ein Schlitten ausgebildet ist.

7. Führungsvorrichtung nach einem der vorhergehenden Ansprüche, **dadurch gekennzeichnet, dass** die Werkzeugaufnahme (3) mittels an der Werkzeugaufnahme (3) angeordneten Führungselementen (3.3, 3.4), insbesondere mittels Rollen, entlang der Steuerkurve (6) führbar ist.

8. Führungsvorrichtung nach Anspruch 7, **dadurch gekennzeichnet, dass** die Werkzeugaufnahme (3) mindestens drei Führungselemente (3.3, 3.4) aufweist.

9. Führungsvorrichtung nach einem der Ansprüche 7 oder 8, **dadurch gekennzeichnet, dass** mindestens zwei Führungselemente (3.3, 3.4) entlang einer ersten Seite und mindestens ein Führungselement (3.3,3.4) entlang einer zweiten Seite der Steuerkurve (6) führbar sind.

10. Führungsvorrichtung nach einem der Ansprüche 7 bis 9, **dadurch gekennzeichnet, dass** mindestens eine Führungselementachse (3.6), insbesondere eines mittleren Führungselements (3.3, 3.4), einstellbar ist.

11. Führungsvorrichtung nach einem der vorhergehenden Ansprüche, **dadurch gekennzeichnet, dass** mindestens ein Lagerblock (4, 5), insbesondere zwei Lagerblöcke (4, 5), zur drehbeweglichen Lagerung des Führungsteils (2) an dem Kabel (14) montierbar ist.

12. Führungsvorrichtung nach Anspruch 11, **dadurch gekennzeichnet, dass** die Neigung zwischen der Steuerkurve (6) und der Kabelachse (A) des Kabels (14) über den Lagerblock (4, 5), insbesondere stufenlos, einstellbar ist.

13. Verfahren zur Formung eines Kabelansatzes (15) mit einer Führungsvorrichtung (1) nach einem der Ansprüche 1 bis 12 für ein motorgetriebenes Spanwerkzeug, insbesondere für eine Fräse, welche an einem elektrischen Kabel (14) montiert wird, mit einer das Spanwerkzeug tragenden Werkzeugaufnahme (3), welche um das elektrische Kabel (14) gedreht und entlang einer Steuerkurve (6) bewegt wird.

14. Verfahren nach Anspruch 13, **dadurch gekennzeichnet, dass** durch die Steuerkurve (6) die relative axiale und radiale Lage der Werkzeugaufnahme (3) zu der Kabelachse vorgegeben wird.

## Claims

1. Guide device for a motor-driven cutting tool, in particular for a milling cutter which can be mounted on an electric cable (14) having a cable axis (A) for forming a cable shoulder (15), having a tool holder (3) carrying the cutting tool, which tool holder (3) can be rotated about the electrical cable (14) and can be moved along a control curve (6) along the cable axis (A), wherein the control curve (6) includes a semi-parabolic course.

2. Guide device according to Claim 1, **characterized in that** the inclination between the control curve (6) and the cable axis (A) of the cable (14) can be variably adjusted.

3. Guide device according to any one of the preceding claims, **characterized in that** the tool holder (3) is arranged on a guide part (2).

4. Guide device according to Claim 3, **characterized in that** the tool holder (3) can be rotated together with the guide part (2) about the electrical cable (14).

5. Guide device according to one of Claims 3 or 4, **characterized in that** the guide part (2) comprises a plurality of control elements (7, 8), each of which has at least one control curve (6).

6. Guide device according to any one of the preceding claims, **characterized in that** the tool holder (3) is designed as a slide.

7. Guide device according to any one of the preceding claims, **characterized in that** the tool holder (3) can be guided along the control curve (6) by means of guide elements (3.3, 3.4) arranged on the tool holder (3), in particular by means of rollers.

8. Guide device according to Claim 7, **characterized in that** the tool holder (3) includes at least three guide elements (3.3, 3.4).

9. Guide device according to one of Claims 7 or 8, **characterized in that** at least two guide elements (3.3, 3.4) can be moved along a first side and at least one guide element (3.3, 3.4) can be moved along a second side of the control curve (6).

10. Guide device according to any one of Claims 7 to 9, **characterized in that** at least one guide element axle (3.6), in particular a central guide element (3.3, 3.4), is adjustable.

11. Guide device according to any one of the preceding claims, **characterized in that** at least one bearing block (4, 5), in particular two bearing blocks (4, 5), can be mounted on the cable (14) for the rotationally movable bearing of the guide part (2).

12. Guide device according to Claim 11, **characterized in that** the inclination between the control curve (6) and the cable axis (A) of the cable (14) can be adjusted, in particular infinitely variably adjusted, via the bearing block (4, 5).

13. Method for forming a cable shoulder (15) with a guide device (1) according to any one of Claims 1 to 12 for a motor-driven cutting tool, in particular for a milling cutter which is mounted on an electrical cable (14), having a tool holder (3) carrying the cutting tool, which tool holder (3) is rotated about the electrical cable (14) and is moved along a control curve (6).

14. Method according to Claim 13, **characterized in that** the relative axial and radial position of the tool holder (3) with respect to the cable axis is predetermined by the control curve (6).

## Revendications

1. Dispositif de guidage pour un outil de coupe motorisé, en particulier pour une fraise, qui peut être montée sur un câble électrique (14) avec un axe de câble (A) pour la formation d'un terminal de câble (15), comprenant un logement d'outil (3) portant l'outil de coupe, qui est rotatif autour du câble électrique (14) et mobile le long d'une came de commande (6) le long de l'axe de câble (A), la came de commande (6) présentant une étendue sous forme de demi-parabole.

2. Dispositif de guidage selon la revendication 1, **caractérisé en ce que** l'inclinaison entre la came de commande (6) et l'axe de câble (A) du câble (14) est réglable de manière variable.

3. Dispositif de guidage selon l'une quelconque des revendications précédentes, **caractérisé en ce que** le logement d'outil (3) est disposé sur une pièce de guidage (2).

4. Dispositif de guidage selon la revendication 3, **caractérisé en ce que** le logement d'outil (3) est rotatif, conjointement avec la pièce de guidage (2), autour du câble électrique (14).

5. Dispositif de guidage selon l'une quelconque des revendications 3 ou 4, **caractérisé en ce que** la pièce de guidage (2) comprend plusieurs éléments de commande (7, 8), qui présentent chacun au moins une came de commande (6).

6. Dispositif de guidage selon l'une quelconque des revendications précédentes, **caractérisé en ce que** le logement d'outil (3) est réalisé sous la forme d'un chariot.

7. Dispositif de guidage selon l'une quelconque des revendications précédentes, **caractérisé en ce que** le logement d'outil (3) peut être guidé au moyen d'éléments de guidage (3.3, 3.4) disposés sur le logement d'outil (3), en particulier au moyen de rouleaux, le long de la came de commande (6).

8. Dispositif de guidage selon la revendication 7, **caractérisé en ce que** le logement d'outil (3) présente au moins trois éléments de guidage (3.3, 3.4).

9. Dispositif de guidage selon l'une quelconque des revendications 7 ou 8, **caractérisé en ce qu'**au moins deux éléments de guidage (3.3, 3.4) peuvent être guidés le long d'un premier côté et au moins un élément de guidage (3.3, 3.4) peut être guidé le long d'un second côté de la came de commande (6).

10. Dispositif de guidage selon l'une quelconque des revendications 7 à 9, **caractérisé en ce qu'**au moins un axe d'élément de guidage (3.6), en particulier d'un élément de guidage médian (3.3, 3.4), est réglable.

11. Dispositif de guidage selon l'une quelconque des revendications précédentes, **caractérisé en ce qu'**au moins un bloc-palier (4, 5), en particulier deux blocs-paliers (4, 5), peuvent être montés pour le support, avec liberté de rotation, de la pièce de guidage (2) sur le câble (14).

12. Dispositif de guidage selon la revendication 11, **caractérisé en ce que** l'inclinaison entre la came de commande (6) et l'axe de câble (A) du câble (14) est réglable par le biais du bloc-palier (4, 5), en particulier en continu.

13. Procédé de formation d'un terminal de câble (15) avec un dispositif de guidage (1) selon l'une quelconque des revendications 1 à 12 pour un outil de coupe motorisé, en particulier pour une fraise, qui est montée sur un câble électrique (14), comprenant un logement d'outil (3) portant l'outil de coupe, qui est entraîné en rotation autour du câble électrique (14) et déplacé le long d'une came de commande (6).

14. Procédé selon la revendication 13, **caractérisé en ce que** la position axiale et radiale relative du logement d'outil (3), par rapport à l'axe de câble, est prédéfinie par l'intermédiaire de la came de commande (6).
